(19) Europäisches Patentamt
European Patent Office
Office européen des brevets

(11) EP 4 621 474 A1

(12) EUROPEAN PATENT APPLICATION
published in accordance with Art. 153(4) EPC

(43) Date of publication:
**24.09.2025 Bulletin 2025/39**

(21) Application number: **23891606.8**

(22) Date of filing: **15.11.2023**

(51) International Patent Classification (IPC):
***G02B 27/01*** *(2006.01)* ***B60J 1/00*** *(2006.01)*
***C03C 27/12*** *(2006.01)* ***G02B 5/30*** *(2006.01)*

(52) Cooperative Patent Classification (CPC):
**B32B 17/00; B60J 1/00; G02B 5/30; G02B 27/01**

(86) International application number:
**PCT/JP2023/041065**

(87) International publication number:
**WO 2024/106459 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.11.2022 JP 2022184061**

(71) Applicant: **FUJIFILM Corporation**
**Tokyo 106-8620 (JP)**

(72) Inventors:
- **UEKI Keigo**
**Minamiashigara-shi, Kanagawa 250-0193 (JP)**
- **UCHIMURA Makoto**
**Minamiashigara-shi, Kanagawa 250-0193 (JP)**
- **ANZAI Akihiro**
**Minamiashigara-shi, Kanagawa 250-0193 (JP)**
- **WATANABE Shinya**
**Minamiashigara-shi, Kanagawa 250-0193 (JP)**

(74) Representative: **Klunker IP**
**Patentanwälte PartG mbB**
**Destouchesstraße 68**
**80796 München (DE)**

# (54) LAMINATED FILM FOR PROJECTED-IMAGE DISPLAY, LAMINATED GLASS FOR PROJECTED-IMAGE DISPLAY, AND PROJECTED-IMAGE DISPLAY SYSTEM

(57) The present invention provides a laminated film for projection image display, which has excellent impact resistance of a laminated glass for projection image display and excellent visibility of a screen image projected onto the laminated glass for projection image display, in a case of being sandwiched between two glass substrates to form the laminated glass for projection image display; a laminated glass for projection image display; and a projection image display system. The laminated film for projection image display of the present invention includes a support, a selective reflection layer disposed on one surface side of the support, and a heat seal layer disposed on the other surface side of the support, in which an average thickness of the heat seal layer is 5 μm or more, and a surface of the heat seal layer opposite to a side of the support exhibits predetermined characteristics.

FIG. 4

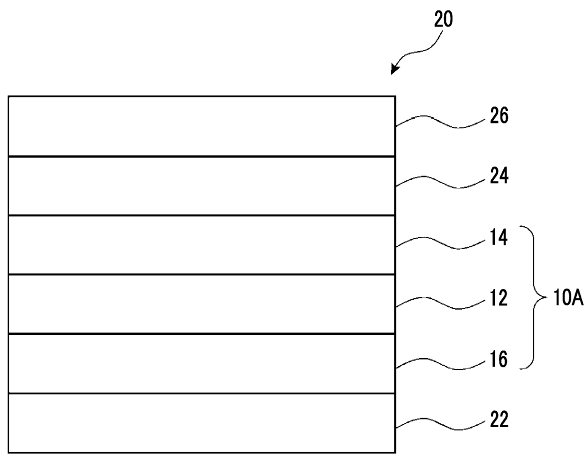


EP 4 621 474 A1

## Description

## BACKGROUND OF THE INVENTION

1. Field of the Invention

The present invention relates to a laminated film for projection image display, a laminated glass for projection image display, and a projection image display system.

2. Description of the Related Art

By incorporating a half-mirror film (reflection film) into laminated glass used for a windshield or the like of an automobile, the half-mirror film (laminated glass) can be used for a projection image display system such as a head-up display system.
WO2020/179787A discloses a laminated film for projection image display, which is suitably used for a projection image display device. The above-described laminated film for projection image display is used as a laminated glass for projection image display, which is sandwiched between two glass substrates.

## SUMMARY OF THE INVENTION

On the other hand, further improvement in performance is required in the laminated glass for projection image display, obtained by using the above-described laminated film for projection image display.
For example, from the viewpoint of application to an automobile, the laminated glass for projection image display is required to have excellent impact resistance.
Furthermore, the laminated glass for projection image display is required to be capable of projecting a projection image without distortion.
As a result of studying the laminated film for projection image display disclosed in WO2020/179787A, the present inventors have found that the above-described characteristics cannot be achieved simultaneously in the laminated glass for projection image display, including the laminated film for projection image display, and further improvement is required.
An object of the present invention is to provide a laminated film for projection image display, which has excellent impact resistance of a laminated glass for projection image display and excellent visibility of a screen image projected onto the laminated glass for projection image display, in a case of being sandwiched between two glass substrates to form the laminated glass for projection image display.
Another object of the present invention is to provide a laminated glass for projection image display and a projection image display system.
The present inventors have found that the above-described objects can be achieved by the following configurations.

(1) A laminated film for projection image display, comprising:

a support;
a selective reflection layer disposed one surface side of the support; and
a heat seal layer disposed on the other surface side of the support,
in which an average thickness of the heat seal layer is 5 μm or more,
in a case where arithmetic average heights Sa in a visual field range of a length of 3700 μm and a width of 4900 μm at different three positions on a surface of the heat seal layer opposite to a side of the support are measured, an average value A of the arithmetic average heights Sa at the respective positions is 40 nm or less, and
in a case where arithmetic average heights Sa in a visual field range of a length of 180 μm and a width of 240 μm at different three positions on the surface of the heat seal layer opposite to the side of the support are measured, an average value B of the arithmetic average heights Sa at the respective positions is 7 nm or more.

(2) The laminated film for projection image display according to (1),
in which a water contact angle of the surface of the heat seal layer opposite to the side of the support is 90° or less.
(3) The laminated film for projection image display according to (1) or (2),
in which the heat seal layer contains a polyvinyl acetal resin.
(4) The laminated film for projection image display according to any one of (1) to (3),

in which the heat seal layer contains silica particles, and

a content of the silica particles is 1% by mass or more with respect to a total mass of the heat seal layer.

(5) The laminated film for projection image display according to (4),
in which the content of the silica particles is 7% by mass or more with respect to the total mass of the heat seal layer.
(6) A laminated glass for projection image display, comprising:

two glass substrates; and
the laminated film for projection image display according to any one of (1) to (5), disposed between the two glass substrates.

(7) A projection image display system comprising:

the laminated glass for projection image display according to (6); and
a projector which emits projection light to the laminated glass for projection image display.

According to the present invention, it is possible to provide a laminated film for projection image display, which has excellent impact resistance of a laminated glass for projection image display and excellent visibility of a screen image projected onto the laminated glass for projection image display, in a case of being sandwiched between two glass substrates to form the laminated glass for projection image display.
In addition, according to the present invention, it is possible to provide a laminated glass for projection image display and a projection image display system.

## BRIEF DESCRIPTION OF THE DRAWINGS

Fig. 1 is a view showing an example of a laminated film for projection image display, in which an average value A is larger than a range of the present invention.
Fig. 2 is a view showing a laminate obtained by bonding the laminated film for projection image display, in which the average value A is larger than a range of the present invention, to a glass substrate.
Fig. 3 is a view showing an example of a laminated film for projection image display according to the embodiment of the present invention.
Fig. 4 is a view showing an example of a laminated glass for projection image display according to the embodiment of the present invention.
Fig. 5 is a view showing an example of a projection image display system according to the embodiment of the present invention.

## DESCRIPTION OF THE PREFERRED EMBODIMENTS

Hereinafter, the present invention will be described in detail.
The description of configuration requirements described below may be made based on typical embodiments of the present invention, but the present invention is not limited to such embodiments.
Any numerical range expressed using "to" in the present specification refers to a range including the numerical values before and after the "to" as a lower limit value and an upper limit value, respectively.
In the present specification, angles (for example, an angle of "90°" or the like) and a relationship thereof (for example, "parallel", "horizontal, "vertical", and the like) are within an allowable error range in the technical field to which the present invention belongs. For example, the angle is in a range of the exact angle ± less than 10°, and the error from the exact angle is preferably 5° or less and more preferably 3° or less.
In the present specification, in a case where "selective" is used regarding circular polarization, the light amount of any one of a dextrorotatory circularly polarized light component or a levorotatory circularly polarized light component is more than the light amount of the other circularly polarized light component. Specifically, as the "selective", a circular polarization degree of light is preferably 0.3 or more, more preferably 0.6 or more, and still more preferably 0.8 or more. It is even more preferable that the circular polarization degree of light is substantially 1.0. Here, in a case where the intensity of a dextrorotatory circularly polarized light component of light is denoted by IR and the intensity of a levorotatory circularly polarized light component of light is denoted by IL, the circular polarization degree is a value represented by $| IR - IL | /(IR + IL)$.
In the present specification, "sense" is used regarding circular polarization means either dextrorotatory circularly polarized light or levorotatory circularly polarized light. The sense of circularly polarized light is defined such that, in a case

where light is viewed as it proceeds toward a viewer, the sense is dextrorotatory circularly polarized light in a case where the distal end of the electric field vector rotates clockwise as time increases, and the sense is levorotatory circularly polarized light in a case where it rotates counterclockwise.

In the present specification, the term "sense" may be used for a twisted direction of the helix of the cholesteric liquid crystal. In a case where a twisted direction (sense) of a helix of a cholesteric liquid crystal is right, the cholesteric liquid crystal reflects dextrorotatory circularly polarized light and transmits levorotatory circularly polarized light; and in a case where the sense is left, the cholesteric liquid crystal reflects levorotatory circularly polarized light and transmits dextrorotatory circularly polarized light.

In the present specification, "light" means light of visible light and natural light (non-polarized light), unless otherwise specified. The visible ray is light at a wavelength which is visible to the human eyes, among electromagnetic waves, and is normally light in a wavelength range of 380 to 780 nm.

In the present specification, in a case of simply referring to "reflected light" or "transmitted light", the "reflected light" and "transmitted light" include meanings of "scattered light" and "diffracted light", respectively.

A polarization state of light at each wavelength can be measured with a spectral radiance meter or a spectrometer on which a circular polarization plate is mounted. In this case, the intensity of light measured through a dextrorotatory circular polarization plate corresponds to IR, and the intensity of light measured through a levorotatory circular polarization plate corresponds to IL. In addition, the polarization state can also be measured by attaching the circular polarization plate to an illuminance meter or an optical spectrometer. The amount of dextrorotatory circularly polarized light is measured by attaching a dextrorotatory circular polarization transmission plate thereto, the amount of levorotatory circularly polarized light is measured by attaching a levorotatory circular polarization transmission plate thereto, and thus, a ratio therebetween can be measured.

In the present specification, "p-polarized light" means polarized light that vibrates in a direction parallel to a surface into which light is incident. The incident surface means a surface that is perpendicular to a reflecting surface (such as a surface of laminated glass) and that includes incident rays and reflected rays. A vibration surface of an electric field vector of the p-polarized light is parallel to the incident surface.

In the present specification, a front phase difference (in-plane retardation) is a value measured with AxoScan manufactured by Axometrics, Inc. Unless otherwise specified, a measurement wavelength is set to 550 nm.

In the present specification, "projection image" means an image based on projection of light from a projector to be used, which is not a scenery viewed from the driver's position such as the driver's field. The projection image is observed as a virtual image which is observed by an observer as the projection image is floated over a projection image display portion of a windshield glass.

In the present specification, "screen image" means an image displayed on an image display apparatus (imager) or an image drawn on an intermediate image screen or the like by the image display apparatus. In contrast to a virtual image, the screen image is a real image.

Both the screen image and the projection image may be monochrome images, may be multicolor images with two or more colors, or may be full color images.

As a feature point of the laminated film for projection image display according to the embodiment of the present invention, a surface of a heat seal layer opposite to a side of a support exhibits a predetermined asperity and the heat seal layer has a predetermined thickness.

An average value A of arithmetic average heights Sa, which will be described later, is an average value of the arithmetic average heights Sa measured in a wide observation visual field, and represents a degree of a height of a large periodic uneven structure on the surface of the heat seal layer. A case where the laminated film for projection image display, in which the average value A is larger than the range of the present invention, is attached to a glass substrate will be described with reference to Figs. 1 and 2. A laminated film 100 for projection image display shown in Fig. 1 includes a support 102, a selective reflection layer 104 disposed on one surface of the support 102, and a heat seal layer 106 disposed on the other surface of the support 102. A surface 106A of the heat seal layer 106 opposite to the side of the support 102 has a large average value A and has a large periodic uneven structure as shown in the drawing. Fig. 2 is a view showing a case where the laminated film 100 for projection image display is bonded to a glass substrate 108. As shown in Fig. 2, in a case where the glass substrate 108 is bonded to the surface 106A side of the heat seal layer 106 shown in Fig. 1, the uneven structure on the surface 106A is transferred to the opposite surface (the surface of the heat seal layer 106 on the side of the support 102), and as a result, the uneven structure is also transferred to a surface of the selective reflection layer 104. In a case where the surface of the selective reflection layer 104 has such an uneven structure, distortion of the projection image and the like occurs. In the present invention, the average value A is adjusted to be equal to or less than a predetermined value so that the above-described problem does not occur.

In addition, an average value B of arithmetic average heights S, which will be described later, is an average value of the arithmetic average heights Sa measured in a wide observation visual field, and represents a degree of a height of a small periodic uneven structure on the surface of the heat seal layer. In a case where the heat seal layer in which the average value B is equal to or more than a predetermined value is bonded to the glass substrate, a small void is generated

between the glass substrate and the heat seal layer during bonding due to the uneven structure. Such a void serves as a passage for air included between the glass substrate and the heat seal layer during bonding, and as a result, air bubbles are less likely to be present between the glass substrate and the heat seal layer, and thus visibility of the projection image is improved. In the present invention, the average value B is adjusted to be equal to or more than a predetermined value so that the above-described effect is obtained.

Furthermore, in the present invention, by setting the heat seal layer to a predetermined thickness or more, impact resistance of a laminated glass for projection image display, which is obtained by using the laminated film for projection image display, is improved.

Fig. 3 is a schematic view showing an example of the laminated film for projection image display according to the embodiment of the present invention.

A laminated film 10A for projection image display shown in Fig. 3 includes a support 12, a selective reflection layer 14 disposed on one surface of the support 12, and a heat seal layer 16 disposed on the other surface of the support 12. A surface of the heat seal layer 16 opposite to the side of the support 12 satisfies the requirements of the average value A and the average value B described later.

In the following, first, the average value A and the average value B, which are the feature point of the present invention, and the thickness of the heat seal layer will be described in detail.

The average value A and the average value B are values obtained under measurement conditions in which ranges of observation regions are different from each other. As described above, the average value A represents the height of the large uneven structure, such as undulation of the surface of the heat seal layer; and the average value B represents the height of the finer uneven structure in a range of a part of the undulation of the surface of the heat seal layer.

In a case of calculating the average value A, first, an arithmetic average height Sa of the surface of the heat seal layer of the laminated film for projection image display on a side opposite to the support side is calculated. More specifically, the arithmetic average height Sa in a range of a visual field size (length: 3700 μm × width: 4900 μm) is measured at three different positions on the surface of the heat seal layer of the laminated film for projection image display using Vertscan 2.0 (manufactured by Ryoka Systems Inc.). Various conditions during the above-described measurement are as follows.

Lens magnification: ×2.5
Lens barrel magnification: ×0.5
Measurement mode: Wave mode

An average value (arithmetic average value) of the arithmetic average heights Sa at the three positions calculated by the above-described measurement is calculated, and the obtained value is defined as the average value A.

The average value A is 40 nm or less. Among these, from the viewpoint that the visibility of the screen image projected onto the laminated glass for projection image display obtained by using two glass substrates and the laminated film for projection image display is more excellent, the average value A is preferably 30 nm or less, and more preferably 20 nm or less. The lower limit thereof is not particularly limited, but is, for example, 1 nm or more, and is often 5 nm or more.

In a case of calculating the average value B, first, an arithmetic average height Sa of the surface of the heat seal layer of the laminated film for projection image display on a side opposite to the support side is calculated. More specifically, the arithmetic average height Sa in a range of a visual field size (length: 180 μm × width: 240 μm) is measured at three different positions on the surface of the heat seal layer of the laminated film for projection image display using Vertscan 2.0 (manufactured by Ryoka Systems Inc.). Various conditions during the above-described measurement are as follows.

Lens magnification: ×50
Lens barrel magnification: ×0.5
Measurement mode: Wave mode

An average value (arithmetic average value) of the arithmetic average heights Sa at the three positions calculated by the above-described measurement is calculated, and the obtained value is defined as the average value B.

The average value B is 7 nm or more. Among these, from the viewpoint that the visibility of the screen image projected onto the laminated glass for projection image display obtained by using two glass substrates and the laminated film for projection image display is more excellent, the average value B is preferably 15 nm or more, and more preferably 20 nm or more. The upper limit thereof is not particularly limited, but is, for example, 40 nm or less, and is often 30 nm or less.

An average thickness of the heat seal layer is 5 μm or more, and from the viewpoint that the impact resistance of the laminated glass for projection image display obtained by using two glass substrates and the laminated film for projection image display is more excellent, it is preferably 7 μm or more, and more preferably 9 μm or more. The upper limit thereof is not particularly limited, but from the viewpoint of thinning, it is preferably 20 μm or less and more preferably 15 or

μm or less.

As a method for measuring the above-described average thickness, the heat seal layer is cut with a microtome to take out a cross section, the cross section is observed with a scanning electron microscope (SEM), thicknesses at three different positions of the heat seal layer are measured, and an average value (arithmetic average value) of the measured values is calculated to obtain the average thickness.

The heat seal layer may have a monolayer structure or a multilayer structure of two or more layers.

In a case where the heat seal layer has a multilayer structure, the average value of the total thickness of the heat seal layers may be within the above-described range. That is, in a case where the heat seal layer is composed of two layers of a heat seal layer 1 and a heat seal layer 2, it is sufficient that the average value (average thickness) of the total thickness of the heat seal layer 1 and the heat seal layer 2 is 5 μm or more.

Hereinafter, members constituting the laminated film for projection image display will be described in detail.

<Support>

The support is a member which supports the selective reflection layer and the heat seal layer.

A front phase difference Re of the support is not particularly limited, but is preferably 10 nm or less and more preferably 5 nm or less.

An absolute value of a phase difference Rth of the support in a thickness direction is not particularly limited, but is preferably 40 nm or less and more preferably 30 nm or less.

In a case where the front phase difference Re and the phase difference Rth in the thickness direction are small, disturbance of polarized light by the support is small, which is preferable.

A constituent material of the support is not particularly limited, and examples thereof include a resin such as a cellulose acylate resin and an acrylic resin. Among these, a cellulose acylate resin is preferable, and a triacetyl cellulose resin or a diacetyl cellulose resin is more preferable.

A thickness of the support is not particularly limited, but is preferably 5.0 to 1,000 μm, more preferably 10 to 250 μm, and still more preferably 15 to 90 μm.

<Selective reflection layer>

The selective reflection layer is a layer which reflects light in a wavelength-selective manner. The selective reflection layer preferably exhibits selective reflection in a part of the visible light wavelength range. The selective reflection layer may reflect light for displaying a projection image.

In the laminated film for projection image display, only one selective reflection layer may be included or two or more selective reflection layers may be included.

In the present specification, a central wavelength λ of selective reflection of the selective reflection layer means a wavelength at a centroid position of a reflection peak of a reflection spectrum measured from a normal direction of the selective reflection layer.

In a case where the laminated film for projection image display includes two or more selective reflection layers, central wavelengths of selective reflection of the two or more selective reflection layers may be the same or different from each other, but are preferably different from each other. By including two or more selective reflection layers having different central wavelengths of the selective reflection, a double image can be reduced. For example, in a case where the laminated film for projection image display includes two layers of the selective reflection layer, the central wavelengths of the selective reflection of the two layers are preferably different from each other by 60 nm or more, more preferably different from each other by 80 nm or more, and still more preferably different from each other by 100 nm or more.

In a case where two or more selective reflection layers are used, it is preferable to use a selective reflection layer in which the central wavelength of the selective reflection is 500 to 650 nm (preferably 500 to 600 nm) and a selective reflection layer in which the central wavelength of the selective reflection is 650 to 900 nm (preferably 650 to 780 nm).

The selective reflection layer is preferably a polarized light reflection layer. The polarized light reflection layer is a layer which selectively reflects linearly polarized light, circularly polarized light, or elliptically polarized light.

The polarized light reflection layer is preferably a circularly polarized light reflection layer or a linearly polarized light reflection layer. The circularly polarized light reflection layer is a layer which reflects circularly polarized light of one sense and allows transmission of circularly polarized light of the other sense at the central wavelength of the selective reflection.

In addition, the linearly polarized light reflection layer is a layer which reflects linear polarization in one polarization direction and transmits linear polarization in a polarization direction orthogonal to the polarization direction at the central wavelength of the selective reflection.

The polarized light reflection layer can transmit non-reflected polarized light, and can transmit a part of light even in a wavelength range in which the selective reflection layer exhibits reflection.

As the selective reflection layer which is a circularly polarized light reflection layer, a cholesteric liquid crystal layer is preferable.

(Cholesteric liquid crystal layer)

The cholesteric liquid crystal layer is a layer in which a cholesteric liquid crystalline phase is fixed.

It is sufficient that the cholesteric liquid crystal layer is a layer in which alignment of a liquid crystal compound serving as the cholesteric liquid crystalline phase is maintained. The cholesteric liquid crystal layer may be typically a layer which is changed into a state in which the polymerizable liquid crystal compound is brought into the alignment state of the cholesteric liquid crystalline phase and polymerized and cured by ultraviolet light irradiation, heating, or the like to form a layer which has no fluidity and also whose alignment is not changed by an external field or an external force.

In the cholesteric liquid crystal layer, it is sufficient that optical properties of the cholesteric liquid crystalline phase are maintained in the layer, and the liquid crystal compound in the layer may not exhibit liquid crystal properties anymore. For example, the polymerizable liquid crystal compound may have a high molecular weight by a curing reaction and no longer have liquid crystal properties.

The cholesteric liquid crystal layer is known to exhibit circularly polarized light selective reflection in which circularly polarized light with any one sense of dextrorotatory circularly polarized light or levorotatory circularly polarized light is selectively reflected and circularly polarized light with the other sense is allowed to transmit.

Many layers formed from a composition containing a polymerizable liquid crystal compound have been known in the related art as the layer in which the cholesteric liquid crystalline phase is fixed, exhibiting circularly polarized light selective reflectivity, and for the cholesteric liquid crystal layer, techniques of the related art can be referred to.

The central wavelength $\lambda$ of the selective reflection of the cholesteric liquid crystal layer depends on a pitch P (= helical period) of the helical structure in the cholesteric phase, and satisfies a relationship of $\lambda = n \times P$ with an average refractive index n of the cholesteric liquid crystal layer. As can be seen from the expression, the central wavelength of the selective reflection can be adjusted to a predetermined range by adjusting the n value and the P value.

The central wavelength of the selective reflection and a half-width of the cholesteric liquid crystal layer can be obtained as follows.

In a case where a transmission spectrum (measured from the normal direction of the cholesteric liquid crystal layer) of the cholesteric liquid crystal layer is measured with a spectrophotometer UV3150 (manufactured by Shimadzu Corporation), a reduction of peak of transmittance is observed in a selective reflection band. Among two wavelengths which are intermediate (average) transmittance between a smallest minimum transmittance of the peak and a transmittance before the peak transmittance is reduced, assuming that a wavelength value of a shorter wavelength side is set $\lambda l$ (nm) and a wavelength value of a longer wavelength side is set $\lambda h$ (nm), the central wavelength $\lambda$ of the selective reflection and the half-width $\Delta\lambda$ can be expressed by the following expression.

$$\lambda = (\lambda l + \lambda h)/2$$

$$\Delta\lambda = (\lambda h - \lambda l)$$

The central wavelength of the selective reflection, obtained as described above, substantially coincides with a wavelength at a centroid position of reflection peak of circularly polarized light reflection spectra measured in the normal direction of the cholesteric liquid crystal layer.

The pitch of the cholesteric liquid crystalline phase depends on the type of chiral agents used together with the polymerizable liquid crystal compound and the addition concentration thereof, and thus, a desired pitch can be obtained by adjusting these. Regarding a method for measuring the sense and the pitch of helix, it is possible to use the method described on page 46 of "Liquid Crystal Chemical Experiment Introduction" edited by Japan Liquid Crystal Society, published by Sigma Corporation in 2007, and page 196 of "Liquid Crystal Handbook" Liquid Crystal Handbook Editing Committee, Maruzen Publishing Co., Ltd.

In addition, in a case where the laminated film for projection image display includes two or more cholesteric liquid crystal layers, in the laminated glass for projection image display, it is preferable that the cholesteric liquid crystal layers are arranged in order from a cholesteric liquid crystal layer having a shortest central wavelength of the selective reflection, as viewed from the visible side (in-vehicle side).

As each cholesteric liquid crystal layer, a cholesteric liquid crystal layer having the sense of helix of dextrorotatory or levorotatory is used. A sense of reflective circularly polarized light in the cholesteric liquid crystal layer coincides with the sense of helix. All of the senses of helixes of the cholesteric liquid crystal layers having different central wavelengths of the selective reflection may be the same or different from each other, but are preferably the same.

In addition, it is preferable that the laminated film for projection image display does not include a cholesteric liquid

crystal layer having a different sense of helix, as a cholesteric liquid crystal layer exhibiting selective reflection in the same or overlapping wavelength range. The reason for this is to avoid a decrease in transmittance to, for example, less than 50% in a specific wavelength range.

In the half-width $\Delta\lambda$(nm) in the selective reflection band indicating the selective reflection, $\Delta\lambda$ depends on a birefringence $\Delta n$ of the liquid crystal compound and the above-described pitch P, and satisfies a relationship of $\Delta\lambda = \Delta n \times P$. Therefore, the width of the selective reflection range can be controlled by adjusting the $\Delta n$. The adjustment of $\Delta n$ can be performed by adjusting the type or mixing ratio of the polymerizable liquid crystal compound, or controlling the temperature during alignment fixing.

In order to form one type of cholesteric liquid crystal layer having the same selective reflection central wavelength, a plurality of cholesteric liquid crystal layers having the same pitch P and the same helical sense may be laminated. By lamination of the cholesteric liquid crystal layers having the same pitch P and the same helical sense, the circular polarization selectivity at a specific wavelength can be increased.

In a case where a plurality of the cholesteric liquid crystal layers are laminated, a cholesteric liquid crystal layer separately produced may be laminated using an adhesive or the like; or a liquid crystal composition containing the polymerizable liquid crystal compound and the like may be applied directly to the surface of the cholesteric liquid crystal layer formed by a method described later, and alignment and fixing steps may be repeated.

A thickness of the cholesteric liquid crystal layer is preferably 0.05 to 10 μm, more preferably 0.1 to 8.0 μm, and still more preferably 0.2 to 6.0 μm.

In addition, the total thickness of the cholesteric liquid crystal layers in the laminated film for projection image display is preferably 2.0 to 30 μm, more preferably 2.5 to 25 μm, and still more preferably 3.0 to 20 μm.

(Production method of cholesteric liquid crystal layer)

Hereinafter, production materials and a production method of the cholesteric liquid crystal layer will be described.

Examples of the material used for forming the above-described cholesteric liquid crystal layer include a liquid crystal composition containing a polymerizable liquid crystal compound and a chiral agent (an optically active compound). The liquid crystal composition may further contain a surfactant, a polymerization initiator, or the like as necessary.

The cholesteric liquid crystal layer can be formed by applying, onto a support, an alignment layer, a cholesteric liquid crystal layer as an underlayer, or the like, the above-described liquid crystal composition which is obtained by mixing and dissolving the components in a solvent, aging cholesteric alignment, and then fixing the cholesteric alignment by curing the liquid crystal composition.

The polymerizable liquid crystal compound may be a rod-like liquid crystal compound or a disk-like liquid crystal compound, but a rod-like liquid crystal compound is preferable.

Examples of the rod-like polymerizable liquid crystal compound forming the cholesteric liquid crystal layer include a rod-like nematic liquid crystal compound. As the rod-like nematic liquid crystal compound, azomethines, azoxys, cyano biphenyls, cyanophenyl esters, benzoic acid esters, cyclohexane carboxylic acid phenyl esters, cyanophenyl cyclohexanes, cyano-substituted phenyl pyrimidines, alkoxy-substituted phenyl pyrimidines, phenyl dioxanes, tolanes, or alkenylcyclohexylbenzonitriles are preferable.

The polymerizable liquid crystal compound is obtained by introducing a polymerizable group into the liquid crystal compound.

Examples of the polymerizable group include an unsaturated polymerizable group, an epoxy group, and an aziridinyl group; and an unsaturated polymerizable group is preferable and an ethylenically unsaturated polymerizable group is more preferable. The polymerizable group can be introduced into the molecule of the liquid crystal compound by various methods. The number of polymerizable groups in the polymerizable liquid crystal compound is preferably 1 to 6 and more preferably 1 to 3.

Examples of the polymerizable liquid crystal compound include compounds described in "Makromol. Chem., vol. 190, p. 2255 (1989), Advanced Materials, vol. 5, p. 107 (1993)", US4683327A, US5622648A, US5770107A, WO95/022586A, WO95/024455A, WO97/000600A, WO98/023580A, WO98/052905A, JP1989-272551A (JP-H1-272551A), JP1994-016616A (JP-H6-016616A), JP1995-110469A (JP-H7-110469A), JP1999-080081A (JP-H11-080081A), JP2001-328973A, and the like.

The polymerizable liquid crystal compound may be used alone or in combination of two or more kinds thereof.

A content of the polymerizable liquid crystal compound in the liquid crystal composition is preferably 80% to 99.9% by mass, more preferably 85% to 99.5% by mass, and still more preferably 90% to 99% by mass with respect to the mass of solid contents (mass excluding a solvent) of the liquid crystal composition.

The chiral agent has a function of inducing the helical structure of the cholesteric liquid crystalline phase. The chiral compound may be selected according to the purpose since the helical sense or the helical pitch of the induced helix varies depending on the compound.

The chiral agent is not particularly limited, and a known compound can be used. Examples of the chiral agent

include compounds described in Liquid Crystal Device Handbooks (Chapter 3, 4-3, Chiral Agents for TN and STN, p. 199, edited by Japan Society for the Promotion of Science, 142 Committee, 1989), JP2003-287623A, JP2002-302487A, JP2002-080478A, JP2002-080851A, JP2010-181852, JP2014-034581A, and the like.

The chiral agent generally includes an asymmetric carbon atom, but an axially asymmetric compound or a planar asymmetric compound, including no asymmetric carbon atom, can also be used as the chiral agent.

Examples of the axially asymmetric compound or the planar asymmetric compound include binaphthyl, helicene, paracyclophane, and derivatives thereof.

The chiral agent may also have a polymerizable group. In a case where both the chiral agent and the liquid crystal compound have a polymerizable group, a polymer having a repeating unit induced from the polymerizable liquid crystal compound and a repeating unit induced from the chiral agent can be formed by a polymerization reaction between the polymerizable chiral agent and the polymerizable liquid crystal compound. In this aspect, the polymerizable group in the polymerizable chiral agent is preferably the same group as the polymerizable group in the polymerizable liquid crystal compound. Accordingly, the polymerizable group of the chiral agent is preferably an unsaturated polymerizable group, an epoxy group, or an aziridinyl group, more preferably an unsaturated polymerizable group, and still more preferably an ethylenically unsaturated polymerizable group.

In addition, the chiral agent may be a liquid crystal compound.

As the chiral agent, an isosorbide derivative, an isomannide derivative, a binaphthyl derivative, or the like can be preferably used. As the isosorbide derivative, a commercially available product such as LC-756 manufactured by BASF may be used.

The chiral agent may be used alone or in combination of two or more kinds thereof.

A content of the chiral agent in the liquid crystal composition is preferably 0.01 to 200 mol% and more preferably 1 to 30 mol% with respect to the total molar amount of the polymerizable liquid crystal compound.

It is preferable that the liquid crystal composition contains a polymerization initiator. In the aspect in which the polymerization reaction is caused to proceed by ultraviolet irradiation, the polymerization initiator to be used is preferably a photopolymerization initiator capable of initiating the polymerization reaction by ultraviolet irradiation.

The polymerization initiator may be used alone or in combination of two or more kinds thereof.

A content of the photopolymerization initiator in the liquid crystal composition is preferably 0.1% to 20% by mass and more preferably 0.5% to 5% by mass with respect to the content of the polymerizable liquid crystal compound.

It is preferable that the liquid crystal composition contains a solvent. As the solvent, an organic solvent is preferable.

The organic solvent is not particularly limited, and examples thereof include a ketone, an alkyl halide, an amide, a sulfoxide, a heterocyclic compound, a hydrocarbon, an ester, and an ether.

The liquid crystal composition may contain a crosslinking agent in order to improve film hardness after curing and to improve durability. As the crosslinking agent, a crosslinking agent which cures the liquid crystal composition with ultraviolet rays, heat, humidity, and the like can be suitably used.

A content of the crosslinking agent in the liquid crystal composition is preferably 3% to 20% by mass and more preferably 5% to 15% by mass with respect to the content of the polymerizable liquid crystal compound.

It is preferable that the liquid crystal composition contains an alignment control agent.

Examples of the alignment control agent include fluorine (meth)acrylate polymers described in paragraphs [0018] to [0043] of JP2007-272185A, compounds represented by Formulae (I) to (IV) described in paragraphs [0031] to [0034] of JP2012-203237A, and compounds described in JP2013-113913A.

A content of the alignment control agent in the liquid crystal composition is preferably 0.01% to 10% by mass and more preferably 0.01% to 5% by mass with respect to the total mass of the polymerizable liquid crystal compound.

The liquid crystal composition may further contain, as necessary, additives such as a surfactant, a polymerization inhibitor, an antioxidant, an ultraviolet absorber, a light stabilizer, a coloring material, and metal oxide particles.

Regarding the cholesteric liquid crystal layer, a cholesteric liquid crystal layer having fixed cholesteric regularity can be formed by applying a liquid crystal composition, which is obtained by dissolving a polymerizable liquid crystal compound, a chiral agent, and as necessary, a polymerization initiator, a surfactant, or the like in a solvent, onto a support, an alignment layer, or a cholesteric liquid crystal layer which is produced in advance, drying the liquid crystal composition to obtain a coating film, and irradiating the coating film with actinic ray to polymerize the cholesteric liquid crystal composition.

A laminated film composed of a plurality of cholesteric liquid crystal layers can be formed by repeating the manufacturing process of the cholesteric liquid crystal layer described above.

A method of applying the liquid crystal composition is not particularly limited, and examples thereof include a wire bar coating method, a curtain coating method, an extrusion coating method, a direct gravure coating method, a reverse gravure coating method, a die-coating method, a spin coating method, a dip coating method, a spray coating method, and a slide coating method.

In addition, the coating method can be performed by transferring the liquid crystal composition which has been separately applied onto a support.

By heating the applied liquid crystal composition, the polymerizable liquid crystal compounds are aligned.
A heating temperature is preferably 200°C or lower and more preferably 130°C or lower. By the alignment treatment, an optical thin film in which the polymerizable liquid crystal compound is twist-aligned so as to have a helical axis in a direction substantially perpendicular to a film surface is obtained.
The liquid crystal composition can be cured by further polymerizing the aligned liquid crystal compounds. The polymerization may be thermal polymerization or photopolymerization by light irradiation, but photopolymerization is preferable.
It is preferable to use ultraviolet rays for the light irradiation. An irradiation energy is preferably 20 $mJ/cm^2$ to 50 $J/cm^2$ and more preferably 100 to 1,500 $mJ/cm^2$.
In order to promote the photopolymerization reaction, the light irradiation may be performed under heating conditions or in a nitrogen atmosphere. An irradiation ultraviolet light wavelength is preferably 350 to 430 nm.

(Linearly polarized light reflection layer)

As the selective reflection layer, a linearly polarized light reflection layer may be used.
Examples of the linearly polarized light reflection layer include a polarizer in which thin films having different refractive index anisotropies are laminated.
As the polarizer in which thin films having different refractive index anisotropies are laminated, for example, a polarizer described in JP1997-506837A (JP-H9-506837A) can be used.
As the polarizer in which thin films having different refractive index anisotropies are laminated, a commercially available product can be used. As the commercially available product, a laminate of a reflective type polarizing plate and a temporary support may be used.
Examples of the commercially available product include commercially available optical films such as DBEF (registered trademark) (manufactured by 3M) and APF (Advanced Polarizing Film (manufactured by 3M)).

<Heat seal layer>

As described above, the heat seal layer has a function of ensuring adhesiveness to the glass substrate.
The heat seal layer is a layer for physically bonding the laminated film for projection image display and the glass substrate to each other.
The heat seal layer preferably contains a thermoplastic resin.
As the thermoplastic resin, a resin having favorable affinity and adhesiveness with the glass substrate is preferable; and a resin selected from the group consisting of a polyvinyl acetal resin typified by a polyvinyl butyral (PVB) resin, an ethylene-vinyl acetate copolymer, and a chlorine-containing resin is preferable, and a polyvinyl acetal resin is more preferable.
As the thermoplastic resin, polyvinyl butyral or an ethylene-vinyl acetate copolymer is preferable, and polyvinyl butyral is more preferable.
The polyvinyl butyral can be obtained by acetalizing polyvinyl alcohol with butyl aldehyde.
An acetalization degree of the polyvinyl butyral is not particularly limited, but is preferably 40% or more and more preferably 60% or more. The upper limit thereof is not particularly limited, but is preferably 85% or less and more preferably 75% or less.
The polyvinyl alcohol used in the synthesis of the polyvinyl butyral is usually obtained by saponifying polyvinyl acetate, and polyvinyl alcohol with a saponification degree of 80 to 99.8 mol% is generally used.
**In** addition, a degree of polymerization of the above-described polyvinyl alcohol is preferably 200 to 3,000.
The thermoplastic resin is preferably used as a main component of the heat seal layer. The main component refers to a component which accounts for 50% by mass or more of the total mass of the heat seal layer.
More specifically, the content of the thermoplastic resin in the heat seal layer is preferably 60% to 99% by mass, and more preferably 70% to 97% by mass with respect to the total mass of the heat seal layer.
The heat seal layer may contain inorganic particles.
As the inorganic particles contained in the heat seal layer, inorganic oxide particles are preferable; and silica (silicon dioxide) particles, aluminum oxide particles, titanium dioxide particles, or zirconium oxide particles are more preferable; and silica particles are still more preferable.
It is preferable that the inorganic particles consist of primary particles, and form secondary particles obtained by aggregation of the primary particles.
An average primary particle diameter of the inorganic particles is not particularly limited, but is preferably 5 to 50 nm and more preferably 5 to 15 nm.
An average secondary particle diameter of the inorganic particles is not particularly limited, but is preferably 100 to 500 nm.

A content of the inorganic particles in the heat seal layer is not particularly limited, but is preferably 1% by mass or more and more preferably 9% by mass or more with respect to the total mass of the heat seal layer. The upper limit thereof is not particularly limited, but is preferably 40% by mass or less and more preferably 30% by mass or less.

Since the content of the inorganic particles in the heat seal layer may affect the above-described average value B, it is preferable to adjust the content of the inorganic particles to be within the above-described range.

The average primary particle diameter of the inorganic particles is measured by transmission electron microscope observation. Specifically, for 50 primary particles optionally selected, a diameter of a circle circumscribed about each primary particle is obtained, and an arithmetic average of these diameters is defined as the average primary particle diameter. An observation magnification of the transmission electron microscope is set to any magnification at which a primary particle diameter in a range of 500,000 times to 5,000,000 times can be discriminated.

The above-described average secondary particle diameter is a value measured by fitting of a perfectly spherical shape (refractive index: 1.46) using a laser diffraction and scattering-type particle size distribution analyzer. As the analyzer, for example, MicroTrac MT3000 manufactured by MicroTrac Co., Ltd. can be used.

The heat seal layer may contain a leveling agent. In a case where the heat seal layer contains a leveling agent, the surface of the heat seal layer is smoothed, and thus the above-described average value A can be reduced.

As the leveling agent, a known leveling agent can be used, and examples thereof include surfactants, in which a fluorine-based surfactant or a silicone-based surfactant is preferable.

A fluorine content in the fluorine-based surfactant is preferably 3% to 40% by mass, more preferably 5% to 30% by mass, and still more preferably 7% to 25% by mass. The fluorine-based surfactant in which the fluorine content is within the above-described range is effective in terms of the evenness of the thickness of the coating film or liquid saving property.

A content of the leveling agent in the heat seal layer is not particularly limited, but is preferably 0.005% to 0.5% by mass and more preferably 0.01% to 0.1% by mass with respect to the total mass of the heat seal layer.

As described above, the heat seal layer exhibits the predetermined average value A and the predetermined average value B on the surface opposite to the support side.

A water contact angle of the surface of the heat seal layer opposite to the support side is not particularly limited, but from the viewpoint that the impact resistance of the laminated glass for projection image display obtained by using two glass substrates and the laminated film for projection image display is more excellent, it is preferably 90° or less, more preferably 80° or less, and still more preferably 70° or less. The lower limit thereof is not particularly limited, but is 10° or more in many cases and 30° or more in more cases.

The measuring method of the above-described water contact angle is as follows.

First, for three different locations on the surface of the heat seal layer in a laminated film for projection image display, a contact angle meter CA-X (manufactured by Kyowa Interface Science Co., Ltd.) is used for producing a liquid droplet with a diameter of 1.0 mm on a needle tip using pure water in an environment of 20°C and 65% RH, and the liquid droplet is brought into contact with the surface of the heat seal layer. At a point where the surface of the heat seal layer and the pure water are in contact 25 seconds after the initial contact, the angle between a tangent line to the surface of the pure water and the surface of the heat seal layer is measured, and an average of these measurement values is defined as the water contact angle of the laminated film for projection image display.

(Method of forming heat seal layer)

A method of forming the heat seal layer is not particularly limited as long as the heat seal layer having the average value A, the average value B, and the average thickness described above in the predetermined ranges can be formed.

Among these, a method of using a composition for forming the heat seal layer, which contains a thermoplastic resin and inorganic particles, is preferable. More specifically, a method of applying the above-described composition for forming the heat seal layer onto the support to form the heat seal layer is preferable.

It is preferable that the content of the thermoplastic resin and the content of the inorganic particles in the composition for forming the heat seal layer are adjusted to the content of the thermoplastic resin and the content of the inorganic particles in the heat seal layer described above.

The composition for forming the heat seal layer may contain the above-described leveling agent.

It is preferable that the content of the leveling agent in the composition for forming the heat seal layer is adjusted to the content of the leveling agent in the heat seal layer described above.

From the viewpoint of coating properties, the composition for forming the heat seal layer preferably contains a solvent.

The type of the solvent is not particularly limited, and examples thereof include water and organic solvents, in which an organic solvent is preferable. Examples of the organic solvent include a ketone, an alkyl halide, an amide, a sulfoxide, a heterocyclic compound, a hydrocarbon, an ester, and an ether.

The average value A of the heat seal layer can be adjusted by adjusting a concentration of solid contents in the composition for forming the heat seal layer. From the viewpoint that the average value A can be further reduced, the

concentration of solid contents in the composition for forming the heat seal layer is preferably 3% by mass or more, and more preferably 5% by mass or more with respect to the total mass of the composition for forming the heat seal layer. The upper limit thereof is not particularly limited, but is preferably 30% by mass or less and more preferably 20% by mass or less.

In a case where the composition for forming the heat seal layer does not contain the leveling agent, from the viewpoint that the average value A can be further reduced, the concentration of solid contents in the composition for forming the heat seal layer is preferably 16% by mass or more with respect to the total mass of the composition for forming the heat seal layer.

The above-described solid content means a component forming the heat seal layer, excluding the solvent. Even in a case where a component is liquid, it is calculated as the solid content.

A method of applying the composition for forming the heat seal layer is not particularly limited, and examples thereof include a wire bar coating method, a curtain coating method, an extrusion coating method, a direct gravure coating method, a reverse gravure coating method, a die-coating method, a spin coating method, a dip coating method, a spray coating method, and a slide coating method.

A coating film obtained by the coating may be subjected to a drying treatment as necessary.

Examples of the drying treatment include a heating treatment. A heating temperature in the heating treatment is not particularly limited, but is preferably 50°C to 150°C and more preferably 60°C to 140°C. A heating time is not particularly limited, but is preferably 0.5 to 20 minutes and more preferably 0.5 to 10 minutes.

A surface treatment may be performed on the surface of the formed heat seal layer (surface opposite to the support side) as necessary.

For example, in order to reduce the water contact angle of the surface of the heat seal layer, a hydrophilic treatment may be performed on the surface of the heat seal layer. Examples of the hydrophilic treatment include plasma treatment, ultraviolet irradiation treatment, corona treatment, and electron beam irradiation treatment, in which corona treatment is preferable.

Conditions of the hydrophilic treatment are appropriately selected according to the type of treatment to be performed, and are preferably adjusted to be within the range of the water contact angle of the surface of the heat seal layer described above.

In addition, a roughening treatment may be performed on the surface of the heat seal layer. By performing the roughening treatment, the range of the average value A and the average value B (particularly, the average value B) described above can be adjusted.

Examples of the roughening treatment include a sanding treatment and a blast treatment. The sanding treatment is a treatment of forming an uneven shape on a surface of an object to be polished, using a base material such as a disk or a belt which holds abrasive grains. The blast treatment is a treatment of forming an uneven shape on a surface of an object to be blasted by jetting abrasive grains.

<Other members>

The laminated film for projection image display may include a member other than the above-described members (the support, the selective reflection layer, and the heat seal layer).

(Alignment layer)

The laminated film for projection image display may include an alignment layer. The alignment layer can function as an underlayer of the cholesteric liquid crystal layer described above and a retardation layer described layer.

The alignment layer can be provided by a method of a rubbing treatment of an organic compound such as a polymer, oblique vapor deposition of an inorganic compound, formation of a layer having microgrooves, or accumulation of an organic compound using a Langmuir-Blodgett method (LB film).

Furthermore, an alignment layer in which an alignment function is generated by application of an electric field, application of a magnetic field, or light irradiation may be used.

In particular, it is preferable that an alignment layer formed of a polymer is subjected to the rubbing treatment, and the liquid crystal composition is applied onto a surface where the rubbing treatment has been performed. The rubbing treatment can be performed by rubbing a surface of the polymer layer with paper or cloth in a certain direction.

Examples of the above-described polymer include polyimide, polyvinyl alcohol, polyester, polyarylate, polyamideimide, polyetherimide, polyamide, and modified polyamide.

A thickness of the alignment layer is preferably 0.01 to 5.0 μm, and more preferably 0.05 to 2.0 μm.

(Retardation layer)

The laminated film for projection image display may include a retardation layer.

In the retardation layer, a phase difference (optical path difference) is provided to two orthogonal polarized light components to change the state of the incident polarized light.

It is preferable that the retardation layer is provided to be present on the visible side with respect to all selective reflection layers (cholesteric liquid crystal layers) during use.

The retardation layer is preferably disposed between the support and the selective reflection layer.

Examples of the retardation layer include a stretched polycarbonate film, a stretched norbornene-based polymer film, a transparent film containing aligned inorganic particles having birefringence, such as strontium carbonate, a thin film in which oblique deposition of an inorganic dielectric is performed on a support, and a film in which the liquid crystal compound is uniaxially aligned and the alignment is immobilized.

As the retardation layer, a film in which the polymerizable liquid crystal compound are uniaxially aligned and the alignment is fixed is preferable. For example, the retardation layer can be formed by a method in which a liquid crystal composition containing a polymerizable liquid crystal compound is applied onto a temporary support, or a surface of an alignment layer, the polymerizable liquid crystal compound in the coating film is formed in a nematic alignment in a liquid crystal state, and the polymerizable liquid crystal compound is immobilized by curing. In this case, the formation of the retardation layer can be carried out in the same manner as the formation of the cholesteric liquid crystal layer described above, except that no chiral agent is added to the liquid crystal composition. However, during the formation of the nematic alignment after applying the liquid crystal composition, the heating temperature is preferably 50°C to 120°C and more preferably 60°C to 100°C.

In a case where the retardation layer converts linearly polarized light into circularly polarized light, the retardation layer is preferably configured to provide $\lambda/4$ as the front phase difference, and may be configured to provide $3\lambda/4$ as the front phase difference. In addition, the angle of the slow axis may be set to change the incident linearly polarized light into circularly polarized light.

In this case, for example, the front phase difference of the retardation layer at a wavelength of 550 nm is preferably in a range of 100 to 450 nm, and more preferably in a range of 120 to 200 nm or 300 to 400 nm.

A thickness of the retardation layer is not particularly limited, but is preferably 0.2 to 300 μm and more preferably 0.4 to 150 μm.

A thickness of the retardation layer formed from the liquid crystal composition is not particularly limited, but is preferably 0.2 to 10 μm and more preferably 0.4 to 5.0 μm.

(Polarization conversion layer)

The laminated film for projection image display may include a polarization conversion layer.

The polarization conversion layer is preferably disposed on the side of the selective reflection layer opposite to the support side.

By providing the polarization conversion layer, it is possible to improve suitability for polarized sunglasses in a projection image display system which projects p-polarized light. The above-described mechanism is described in detail in paragraph 0102 of WO2020/080355A.

Examples of the polarization conversion layer include a layer in which a helical alignment structure of liquid crystal compounds is immobilized.

As the layer in which the helical alignment structure of liquid crystal compounds is immobilized, a polarization conversion layer which satisfies Relational Expressions (i) and (ii) below, in a case where the number of pitches of the helical structure of the polarization conversion layer is denoted by x and a film thickness of the polarization conversion layer is denoted by y (unit: μm), is preferable.

(i)

$$0.3 \leq x \leq 2.0$$

(ii)

$$0.5 \leq y \leq 7.0$$

The pitch (one helical pitch) of the helical structure is a length in a helical axis direction in which a director of the liquid crystal compound forming the helical alignment structure rotates by 360 degrees, as in the cholesteric liquid crystal

layer. In the polarization conversion layer in which the helical alignment structure of liquid crystal compounds is immobilized, the number of pitches in which the director of the liquid crystal compound rotates by 360 degrees is defined as 1.

In the polarization conversion layer in which the helical alignment structure of liquid crystal compounds is immobilized, the number of pitches is preferably 0.3 to 2.0, and the film thickness is preferably 0.5 to 7.0 μm.

(Adhesive layer)

The laminated film for projection image display may include an adhesive layer. The adhesive layer is used for ensuring adhesiveness between layers.

A position of the adhesive layer is not particularly limited, and examples thereof include a position between the cholesteric liquid crystal layers, a position between the selective reflection layer and the retardation layer, and a position between the selective reflection layer and the polarization conversion layer.

It is sufficient that the adhesive layer is formed of an adhesive.

The adhesive includes a hot melt type, a thermosetting type, a photocuring type, a reaction curing type, and a pressure-sensitive adhesive type which does not require curing.

A thickness of the adhesive layer is preferably 0.5 to 10 μm, and more preferably 1.0 to 5.0 μm.

A thickness of an adhesive layer formed of an OCA tape is preferably 10 to 50 μm, and more preferably 15 to 30 μm.

<Laminated glass for projection image display>

The above-described laminated film for projection image display can be suitably used as a laminated glass for projection image display by being sandwiched between two glass substrates.

The laminated glass for projection image display can be suitably adopted to window glass and windshield glass of vehicles such as cars and trains, airplanes, ships, motorcycles, and general vehicles such as playground equipment. It is preferable that the laminated glass for projection image display is used as a windshield or windshield glass in front of a vehicle in a traveling direction.

Fig. 4 is a schematic view showing an example of the laminated glass for projection image display according to the embodiment of the present invention.

A laminated glass 20 for projection image display shown in Fig. 4 includes a first glass substrate 22, the laminated film 10A for projection image display, an interlayer film 24, and a second glass substrate 26. The heat seal layer in the laminated film 10A for projection image display is disposed on the first glass substrate 22 side.

Hereinafter, members constituting the laminated glass for projection image display will be described in detail.

The laminated film for projection image display is as described above, and the description thereof will be omitted.

(First glass substrate and second glass substrate)

Examples of the first glass substrate and the second glass substrate include a glass substrate generally used for laminated glass. For example, a glass substrate having a visible light transmittance of 80% or less, for example, 73% or 76%, such as green glass having high heat insulating properties, may be used.

Thicknesses of the first glass substrate and the second glass substrate are not particularly limited, but are preferably 0.5 to 5.0 mm and more preferably 1.0 to 3.0 mm.

Materials or thicknesses of the first glass substrate and the second glass substrate may be the same or different from each other.

(Interlayer film)

As the interlayer film, any known interlayer film used for a laminated glass of a vehicle may be used. Examples thereof include a resin film containing a resin selected from the group consisting of polyvinyl butyral (PVB), an ethylene-vinyl acetate copolymer, and a chlorine-containing resin.

The above-described resin is preferably a main component of the interlayer film. The main component refers to a component which accounts for 50% by mass or more of the total mass of the interlayer film.

Among these resins, polyvinyl butyral or an ethylene-vinyl acetate copolymer is preferable, and polyvinyl butyral is more preferable.

The polyvinyl butyral can be obtained by acetalizing polyvinyl alcohol with butyl aldehyde.

An acetalization degree of the polyvinyl butyral is not particularly limited, but is preferably 40% or more and more preferably 60% or more. The upper limit thereof is not particularly limited, but is preferably 85% or less and more preferably

75% or less.

The polyvinyl alcohol used in the synthesis of the polyvinyl butyral is usually obtained by saponifying polyvinyl acetate, and polyvinyl alcohol with a saponification degree of 80 to 99.8 mol% is generally used.

In addition, a degree of polymerization of the above-described polyvinyl alcohol is preferably 200 to 3,000.

A method of manufacturing the laminated glass for projection image display according to the embodiment of the present invention is not particularly limited, and a known method can be adopted.

In general, the laminated glass can be manufactured by a method of interposing the interlayer film for a laminated glass between two glass substrates, repeatedly performing a heating treatment and a pressurizing treatment (treatment using rubber rollers, or the like) several times, and finally performing a heating treatment under a pressurizing condition using an autoclave.

Examples of the method of manufacturing the laminated glass for projection image display, which includes the laminated film for projection image display and the interlayer film, include a method in which the heat seal layer of the laminated film for projection image display is bonded to the first glass substrate, the obtained laminate and the second glass substrate are laminated through the interlayer film, and a heating treatment and/or a pressurizing treatment is performed.

<Projection image display system>

The projection image display system according to the embodiment of the present invention is a system including the above-described laminated glass for projection image display and a projector.

Fig. 5 shows an example of the projection image display system.

A projection image display system 30 shown in Fig. 5 includes a laminated glass 32 for projection image display and a projector 34. The projection image display system 30 is used for, for example, a vehicle such as a passenger car.

The laminated glass 32 for projection image display includes a first glass substrate 22, a laminated film 10B for projection image display, an interlayer film 24, and a second glass substrate 26.

The laminated film 10B for projection image display includes a heat seal layer, a support, a retardation layer, and a selective reflection layer in this order. The laminated film 10B for projection image display is bonded to the first glass substrate 22 through the heat seal layer.

In the projection image display system 30, the projector 34 emits projection light of p-polarization, and the laminated glass 32 for projection image display reflects the p-polarized light to display a screen image.

Specifically, in the laminated glass 32 for projection image display, first, the retardation layer converts the incident the projection light of p-polarization into circularly polarized light. Next, the selective reflection layer selectively reflects the circularly polarized light and re-injects the circularly polarized light into the retardation layer. Furthermore, the retardation layer converts the circularly polarized light into p-polarized light. As a result, the laminated film 10B for projection image display reflects the incident projection light of p-polarization as the p-polarized light.

Accordingly, the retardation layer is set to convert the incident p-polarized light into circularly polarized light in a turning direction in which the selective reflection layer reflects the circularly polarized light, according to the sense of the circularly polarized light which is selectively reflected by the selective reflection layer. That is, in a case where the selective reflection layer selectively reflects dextrorotatory circularly polarized light, the retardation layer is set to convert the incident p-polarized light into dextrorotatory circularly polarized light. By contrast, in a case where the selective reflection layer selectively reflects levorotatory circularly polarized light, the retardation layer is set to convert the incident p-polarized light into levorotatory circularly polarized light.

In the projection image display system 30, it is preferable that the projector 34 emits projection light of p-polarization to the laminated glass 32 for projection image display. By setting the projection light emitted from the projector 34 to the laminated glass 32 for projection image display to be p-polarized light, the reflection of the projection light from the first glass substrate 22 and the second glass substrate 26 of the laminated glass 32 for projection image display can be significantly reduced, and inconveniences such as observation of a double image can be suppressed.

The projector 34 preferably emits the projection light of p-polarization to the windshield at the Brewster's angle. Therefore, the reflection of the projection light by the first glass substrate 22 and the second glass substrate 26 is eliminated, which allows display of a clearer screen image.

(Projector)

The "projector" is "device projecting light or a screen image", includes "device projecting a drawn screen image", and emits projection light carrying and supporting a screen image to be displayed. It is preferable that the projector emits projection light of p-polarization.

The projector may be disposed such that the projection light of p-polarization carrying and supporting the screen image to be displayed can be incident on the laminated glass for projection image display at an oblique incidence angle.

It is preferable that the projector includes a drawing device, and reflects and displays a screen image (real image) drawn on a small intermediate image screen as a virtual image by a combiner.

In addition, in the projector, an imaging distance of the virtual image, that is, a virtual image formation position is preferably variable.

Examples of a method of changing the imaging distance of the virtual image in the projector include a method in which a surface on which a screen image is generated (screen) is moved (refer to JP2017-021302A); a method in which a plurality of optical paths having different optical path lengths are changed (refer to WO2015/190157A); a method in which an optical path length is changed by inserting and/or moving mirrors; a method in which a focal length is changed by using an assembled lens as an imaging lens; a method in which the projector is moved; a method in which a plurality of projectors having different imaging distances of virtual images are changed and used; and a method in which a variable-focal-length lens is used (refer to WO2010/116912A).

The projector may be a projector in which the imaging distance of the virtual image is continuously changeable or a projector in which the imaging distance of the virtual image can be changed at two or three or more points.

The drawing device may itself be a device displaying the screen image or a device emitting light capable of drawing the screen image.

In the drawing device, light from a light source may be adjusted by a drawing method such as an optical modulator, a laser brightness modulation unit, and an optical deflection unit for drawing. The drawing device means a device which includes a light source and further includes an optical modulator, a laser brightness modulation unit, an optical deflection unit, or the like for drawing according to the drawing method.

The light source is not limited, and known light sources used in projectors, drawing devices, and displays, such as a light emitting diode (LED), an organic light-emitting diode (OLED), a discharge tube, and a laser light source, may be used.

Among these, the LED and the discharge tube are preferable since they are suitable for a light source of a drawing device which emits linearly polarized light, and the LED is more preferable.

The drawing method can be selected depending on the light source or the like to be used, and is not particularly limited.

Examples of the drawing method include a fluorescent display tube, a liquid crystal display (LCD) method or a liquid crystal on silicon (LCOS) method using a liquid crystal, Digital Light Processing (DLP) (registered trademark) method, and a scanning method using a laser. The drawing method may be a method using a fluorescent display tube integrated with the light source. The LCD method is preferable as the drawing method.

Light emitted from the drawing device may be linearly polarized light or natural light (non-polarized light).

In a drawing device using a drawing method of the LCD method or the LCOS method and a drawing device using the laser light source, light emitted from the drawing device is essentially linearly polarized light. In a case where a drawing device in which the emitted light is linearly polarized light and includes light beams having a plurality of wavelengths (colors), polarization directions (transmission axis directions) of the light in a plurality of wavelengths are preferably the same as each other. As commercially available drawing devices, a device having non-uniform polarization directions in wavelength ranges of red light, green light, and blue light included in the emitted light is known (refer to JP2000-221449A). Specifically, as an example, a polarization direction of green light is orthogonal to a polarization direction of red light and a polarization direction of blue light is known.

As described above, the drawing device may use an intermediate image screen. The "intermediate image screen" is a screen on which the screen image is drawn. That is, in a case where light emitted from the drawing device is not yet visible as the screen image, the drawing device forms a screen image visible on the intermediate image screen using the light. The screen image drawn on the intermediate image screen may be projected on the combiner by light transmitted through the intermediate image screen, or may be reflected on the intermediate image screen and projected on the combiner.

It is preferable that the laminated glass for projection image display is used in combination with a projector using, as the light source, a laser, an LED, an organic light emitting diode (OLED), or the like having a non-continuous luminescence wavelength in a visible light range.

It is preferable that the incidence ray is incident at an oblique incidence angle of 45° to 70° with respect to a normal line of the laminated film for projection image display in the laminated glass for projection image display. The Brewster's angle at an interface between a glass having a refractive index of approximately 1.51 and air having a refractive index of 1 is approximately 56°, and the p-polarized light is allowed to incident in the range of the angle; whereby display of a screen image with a small amount of the reflected light of the incident light for the projection image display, which is reflected from the surface of the laminated glass for projection image display on the visible side with respect to the selective reflection layer, and with a decreased effect of a double image can be achieved.

It is also preferable that the above-described angle is 50° to 65°. In this case, it is sufficient to employ a configuration in which an observation of the projection image can be performed at an angle of 45° to 70°, preferably 50° to 65° on a side opposite to a side on which light is incident, with respect to the normal line of the selective reflection layer in the

side on which projection light is incident.

The incidence ray may be incident from any direction such as up, down, left, and right of the laminated glass for projection image display, and may be determined in accordance with a visual recognition direction. For example, the incidence ray is preferably incident at an obliquely incidence angle from the bottom during use.

In addition, it is preferable that the laminated film for projection image display of the laminated glass for projection image display is disposed to reflect incident p-polarized light.

The present invention is basically configured as described above. Hereinabove, the laminated glass for projection image display, the laminated glass for projection image display, and the projection image display system according to the embodiments of the present invention have been described in detail; but the present invention is not limited to the above-described embodiments, and various improvements or modifications may be made without departing from the spirit of the present invention.

Examples

Hereinafter, the present invention will be described in more detail with reference to the examples. The materials, reagents, amounts and proportions of substances, operations, and the like described in Examples, Comparative Examples, and Production Examples below can be appropriately modified as long as the gist of the present invention is maintained. Therefore, the scope of the present invention is not limited to Examples below.

<Preparation of composition for forming cholesteric liquid crystal layer, composition for forming retardation layer, and composition for forming polarization conversion layer>

Each component was mixed in the formulation shown in Table 1 below, and the obtained mixture was filtered through a polypropylene filter having a pore diameter of 10 μm to prepare compositions BG1, R1, and IR1 for forming a cholesteric liquid crystal layer, a composition A1 for forming a retardation layer, and a composition TW-1 for forming a polarization conversion layer.

[Table 1]

| | | BG1 | R1 | IR1 | A1 | TW1 |
|---|---|---|---|---|---|---|
| Polymerizable liquid crystal compound | Mixture 1 | 100.00 | 100.00 | 100.00 | 100.00 | 100.00 |
| Chiral agent | LC756 (manufactured by BASF) | 6.37 | 4.08 | 3.36 | | 0.32 |
| Photoinitiator | Irgacure OXE01 (manufactured by BASF) | 1.00 | 1.00 | 1.00 | 1.00 | 1.00 |
| Alignment control agent | Alignment control agent 1 | 0.05 | 0.05 | 0.05 | 0.05 | 0.05 |
| | Alignment control agent 2 | 0.02 | 0.02 | 0.02 | 0.01 | 0.02 |
| Solvent | Methyl ethyl ketone (MEK) | 134.30 | 131.44 | 130.54 | 126.33 | 126.74 |

The unit of the numerical value in Table 1 is part by mass.

Details of each compound shown in Table 1 are provided below.

· Mixture 1

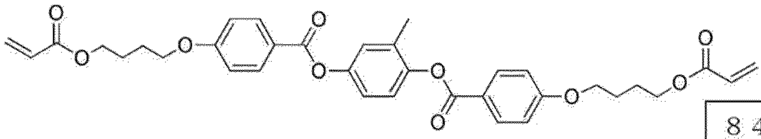

8 4 %

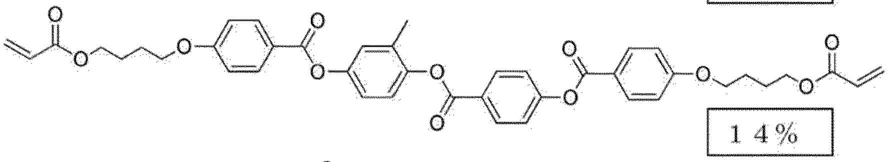

1 4 %

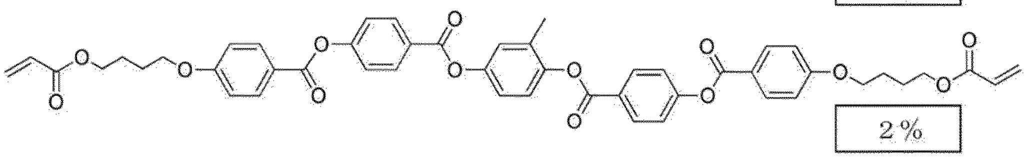

2 %

Numerical value is % by mass.

Alignment control agent 1

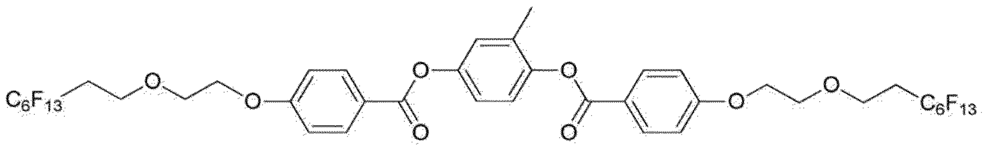

Alignment control agent 2

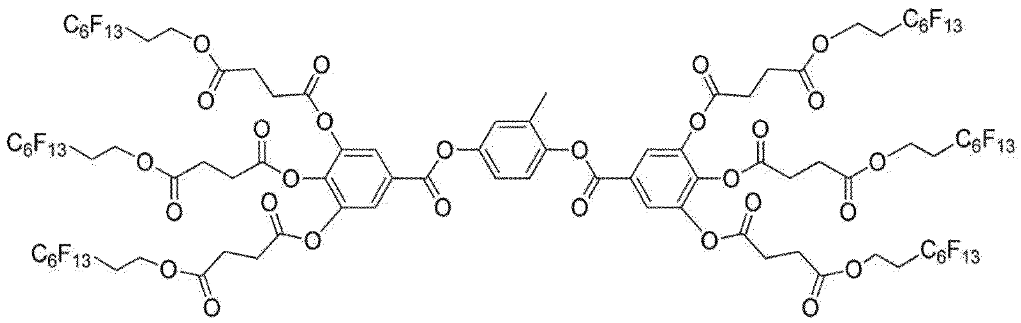

<Saponification of cellulose acylate film>

A cellulose acylate film having a thickness of 40 μm was produced by the same production method as in Example 20 described in WO2014/112575A. UV-531 manufactured by Fujian Disheng Technology Co., Ltd. was added to the cellulose acylate film as an ultraviolet absorber. The addition amount thereof was 3 per hundred resin (phr).

After passing the produced cellulose acylate film through a dielectric heating roll at a temperature of 60°C to raise the surface temperature of the film to 40°C, one side of the film was coated with an alkaline solution with formulation provided as below at a coating amount of 14 mL/$m^2$ using a bar coater, and was allowed to stay under a steam-type far infrared heater (manufactured by Noritake Co., Ltd.) heated to 110°C for 10 seconds.

Next, pure water was applied thereto at 3 mL/$m^2$ using a bar coater in the same manner.

Next, washing with water using a fountain coater and dewatering using an air knife were repeated three times, staying in a drying zone at 70°C was performed for 5 seconds, and drying was performed to produce a cellulose acylate film 1 subjected to the saponification treatment.

Formulation of alkali solution

| | |
|---|---|
| · Potassium hydroxide | 4.7 parts by mass |
| · Water | 15.7 parts by mass |
| · Isopropanol | 64.8 parts by mass |
| · Surfactant ($C_{16}H_{33}O(CH_2CH_2O)_{10}H$) | 1.0 part by mass |
| · Propylene glycol | 14.9 parts by mass |

<Formation of alignment layer>

The saponified surface of the saponified cellulose acylate film 1 (support) obtained as described above was coated with a coating liquid for forming an alignment layer, having formulation described below, using a wire bar coater at 24 mL/m$^2$, and dried with hot air at 100°C for 120 seconds to obtain an alignment layer having a thickness of 0.5 μm.

Formulation of coating liquid for forming alignment layer

| | |
|---|---|
| · Modified polyvinyl alcohol shown below | 28 parts by mass |
| · Citric acid ester (AS3, manufactured by SANKYO CHEMICAL CO.,LTD.) | 1.2 parts by mass |
| · Photoinitiator (Irgacure 2959, manufactured by BASF) | 0.84 parts by mass |
| · Glutaraldehyde | 2.8 parts by mass |
| · Water | 699 parts by mass |
| · Methanol | 226 parts by mass |

(Modified polyvinyl alcohol)

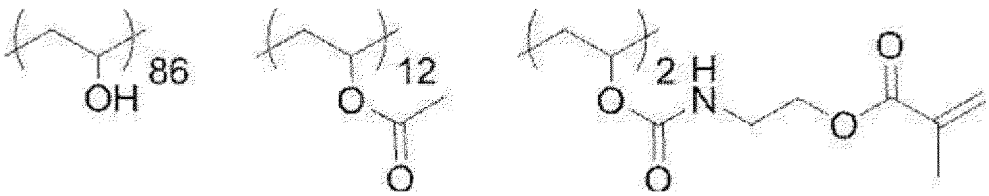

<Production of reflection film>

The alignment layer produced as described above was subjected to a rubbing treatment (rayon cloth, pressure: 0.1 kgf (0.98 N), rotation speed: 1,000 revolutions per minute (rpm), transportation speed: 10 m/min, number of times: 1 round trip) in a direction rotated clockwise by 45° with respect to a long side direction of a support.

The composition A1 for forming a retardation layer was applied onto the rubbed surface of the alignment layer using a wire bar, dried, placed on a hot plate at 50°C, and irradiated with ultraviolet rays for 6 seconds using an electrodeless lamp "D bulb" (60 mW/cm$^2$) manufactured by Fusion Co., Ltd. in an environment with an oxygen concentration of 1,000 ppm or less to form a retardation layer.

In a case where a front phase difference of the produced retardation layer at a wavelength of 550 nm was measured with AxoScan manufactured by Axometrics, Inc., it was 126 nm.

The composition IR1 for forming a cholesteric liquid crystal layer was further applied onto the surface of the retardation layer produced above using a wire bar at room temperature so that the thickness of the dry film after drying was 0.4 μm, and the coating layer was dried at room temperature for 30 seconds, and then heated in an atmosphere of 85°C for 2 minutes. Thereafter, in an environment with an oxygen concentration of 1,000 ppm or less, a D bulb (90 mW/cm$^2$ lamp) manufactured by Fusion Co., Ltd. was used for irradiation with ultraviolet rays at 60°C and an output of 60% for 6 to 12 seconds to immobilize a cholesteric liquid crystalline phase, thereby obtaining a cholesteric liquid crystal layer IR1 having a thickness of 0.4 μm.

Next, the same process was repeated on the surface of the obtained cholesteric liquid crystal layer IR1 using the

composition BG1 for forming a cholesteric liquid crystal layer, thereby laminating a cholesteric liquid crystal layer BG1 having a thickness of 0.84 μm thereon.

Next, the same process was repeated on the surface of the obtained cholesteric liquid crystal layer BG1 using the composition R1 for forming a cholesteric liquid crystal layer, thereby laminating a cholesteric liquid crystal layer R1 having a thickness of 0.36 μm thereon.

In this way, a film having a reflective layer consisting of three cholesteric liquid crystal layers was obtained. In a case where a transmission spectrum of the film was measured with a spectrophotometer (manufactured by JASCO Corporation, V-670), transmission spectra having selective reflection center wavelengths at wavelengths of 515 nm, 685 nm, and 775 nm were obtained.

The composition TW1 for forming a polarization conversion layer was applied onto the cholesteric liquid crystal layer R1 produced above using a wire bar at room temperature so that the thickness of the dry film after drying was 0.8 μm, and the coating layer was dried at room temperature for 30 seconds, and then heated in an atmosphere of 85°C for 2 minutes. Thereafter, in an environment with an oxygen concentration of 1,000 ppm or less, the coating layer was irradiated with ultraviolet rays at 60°C and an output of 60% for 6 to 12 seconds using a D-valve (90 mW/cm$^2$ lamp) manufactured by Fusion Co., Ltd. to fix the polarization conversion layer, thereby obtaining a reflection film.

<Preparation of composition for forming heat seal layer>

Each component was mixed in the formulation shown in Table 2 below, and the obtained mixture was filtered through a polypropylene filter having a pore diameter of 10 μm, thereby preparing compositions HS-1 to HS-8 for forming a heat seal layer.

[Table 2]

| | | HS-1 | HS-2 | HS-3 | HS-4 | HS-5 | HS-6 | HS-7 | HS-8 |
|---|---|---|---|---|---|---|---|---|---|
| Thermoplastic resin | S-LEC KS-10 (manufactured by SEKISUI CHEMICAL CO., LTD.) | 4.88 | 14.62 | 14.62 | 14.62 | 17.70 | 17.55 | 16.38 | 14.63 |
| Silica particles | AEROSIL RX300 (manufactured by Nippon Aerosil Co., Ltd.) | 0.13 | 0.38 | 0.38 | 0.38 | 0.30 | 0.45 | 1.62 | 0.38 |
| Leveling agent | F-784-F (manufactured by DIC Corporation, 30% MEK diluted solution) | | 0.0050 | 0.0125 | 0.0250 | | | | |
| Solvent | Methyl ethyl ketone (MEK) | 47.50 | 42.50 | 42.49 | 42.48 | 24.60 | 24.60 | 24.60 | 42.50 |
| | Butyl acetate | 47.50 | 42.50 | 42.50 | 42.50 | 49.20 | 49.20 | 49.20 | 42.50 |
| | Cyclohexanone | | | | | 8.20 | 8.20 | 8.20 | |

The unit of the numerical value in Table 2 is part by mass.

AEROSIL RX300 (manufactured by Nippon Aerosil Co., Ltd.; average primary particle diameter: 7 nm) was added to butyl acetate so that the concentration of solid contents was 5% by mass, and the mixture was stirred with a magnetic stirrer for 30 minutes. Thereafter, the mixture was subjected to ultrasonic dispersion treatment with an ultrasonic disperser (manufactured by SMT Co.,Ltd., Ultrasonic Homogenizer UH-600S) for 10 minutes to produce a silica particle dispersion.

A part of the obtained silica particle dispersion was collected for measuring the average secondary particle diameter, and the average secondary particle diameter of the silica particles in the silica particle dispersion was measured using Microtrac MT3000 (manufactured by MicrotracBEL Corp.), and as a result, the average secondary particle diameter was 190 nm.

The composition for forming a heat seal layer was produced using the silica particle dispersion obtained above.
In addition, the content of the silica particles in Table 2 indicates the content of the silica particles themselves.

<Example 1>

The composition HS-1 for forming a heat seal layer was applied onto the surface of the support in the reflection film on the side where the retardation layer was not applied using a wire bar such that a film thickness after drying was 1 μm, and dried at 100°C for 1 minute to form a heat seal layer 1.
Next, the composition HS-2 for forming a heat seal layer was further applied onto the surface of the obtained heat seal layer 1 using a wire bar such that a film thickness after drying was 5 μm, and dried at 100°C for 2 minutes to form a heat seal layer 2.
A blast treatment (time: 3 seconds) was performed on the surface of the heat seal layer 2 in the laminated film produced above, thereby obtaining a laminated film 1 for projection image display, which had a retardation layer, three cholesteric liquid crystal layers (selective reflection layers), and a polarization conversion layer on one surface of the support, and had a heat seal layer having a thickness of 6.0 μm on the other surface thereof.

<Examples 2 and 3>

Laminated films 2 and 3 for projection image display were obtained in the same manner as in Example 1, except that the composition for forming a heat seal layer in a case of forming the heat seal layer 2 was changed as shown in Table 3.

<Example 4>

A laminated film 4 for projection image display of Example was obtained in the same manner as in Example 3, except that the blast treatment time was changed to 10 seconds.

<Example 5>

A laminated film 5 for projection image display of Example was obtained in the same manner as in Example 3, except that the blast treatment time was changed to 15 seconds.

<Example 6>

A laminated film 6 for projection image display was obtained in the same manner as in Example 5, except that the surface of the heat seal layer 2 after the blast treatment was further subjected to a corona treatment at a treatment amount of 88 W·min/$m^2$.

<Example 7>

A laminated film 7 for projection image display was obtained in the same manner as in Example 6, except that the coating was performed such that the film thickness of the heat seal layer 2 after drying was 9 μm.

<Example 8>

The composition HS-1 for forming a heat seal layer was applied onto the surface of the support in the reflection film produced above on the side where the retardation layer was not applied using a wire bar such that a film thickness after drying was 1 μm, and dried at 100°C for 1 minute to form a heat seal layer 1.
Next, the composition HS-5 for forming a heat seal layer was further applied onto the surface of the obtained heat seal layer 1 using a wire bar such that a film thickness after drying was 9 μm, and dried at 120°C for 2 minutes to form a heat seal layer 2.
By the above-described procedure, a laminated film 8 for projection image display, which had a retardation layer, three cholesteric liquid crystal layers (selective reflection layers), and a polarization conversion layer on one surface of the support, and had a heat seal layer having a thickness of 10.0 μm on the other surface of the support, was obtained.

<Examples 9 and 10>

Laminated films 9 and 10 for projection image display were obtained in the same manner as in Example 8, except

that the composition for forming a heat seal layer in a case of forming the heat seal layer 2 was changed as shown in Table 3.

<Comparative Example 1>

A laminated film C1 for projection image display was obtained in the same manner as in Example 8, except that the composition for forming a heat seal layer in a case of forming the heat seal layer 2 was changed as shown in Table 3, and the coating was performed using a wire bar such that the film thickness after drying was 1.5 μm.

<Comparative Examples 2 and 3>

Laminated films C2 and C3 for projection image display were obtained in the same manner as in Comparative Example 1, except that the composition for forming a heat seal layer in a case of forming the heat seal layer 2 was changed as shown in Table 3, and the coating was performed using a wire bar such that the film thickness after drying was 5 μm.

<Measurement>

(Average value A of arithmetic average heights Sa)

For three different portions on the surface of the heat seal layer in the laminated film for projection image display, obtained in Examples and Comparative Examples, arithmetic average heights Sa in a visual field size of 3700 μm × 4900 μm were measured using Vertscan 2.0 (manufactured by Ryoka Systems Inc.) in a Wave mode with a lens magnification of ×2.5 and a lens barrel magnification of ×0.5, and an average value (arithmetic average value) thereof was defined as an average value A.

(Average value B of arithmetic average roughness Sa)

For three different portions on the surface of the heat seal layer in the laminated film for projection image display, obtained in Examples and Comparative Examples, arithmetic average heights Sa in a visual field size of 180 μm × 240 μm were measured using Vertscan 2.0 (manufactured by Ryoka Systems Inc.) in a Wave mode with a lens magnification of ×50 and a lens barrel magnification of ×0.5, and an average value (arithmetic average value) thereof was defined as an average value B.

(Water contact angle)

For three different locations on the surface of the heat seal layer in the laminated film for projection image display, obtained in Examples and Comparative Examples, a contact angle meter CA-X (manufactured by Kyowa Interface Science Co., Ltd.) was used for producing a liquid droplet with a diameter of 1.0 mm on a needle tip using pure water in an environment of 20°C and 65% RH, and the liquid droplet was brought into contact with the surface of the heat seal layer. At a point where the surface of the heat seal layer and the pure water were in contact 25 seconds after the initial contact, the angle between a tangent line to the surface of the pure water and the surface of the heat seal layer was measured, and an average of these measurement values was defined as a water contact angle of the laminated film for projection image display.

<Production of laminated glass>

The laminated film for projection image display obtained in Examples and Comparative Examples, having a length of 220 mm and a width of 290 mm, was placed on a convex curved glass substrate having a length of 260 mm, a width of 330 mm, and a thickness of 2 mm such that the surface on the heat seal layer side was in contact with the glass substrate, at the center of the glass substrate. In this manner, a laminate including the first glass substrate, the heat seal layer 2, the heat seal layer 1, the support, the retardation layer, the selective reflection layer, and the polarization conversion layer in this order was formed.

A PVB film (interlayer film) having a length of 260 mm, a width of 330 mm, and a thickness of 0.76 mm, manufactured by Sekisui Chemical Co., Ltd., was disposed on the laminate, and a convex curved glass substrate (second glass substrate) having a length of 260 mm, a width of 330 mm, and a thickness of 2 mm was further disposed thereon. The laminate was held at 115°C and 10 kPa (0.1 atm) for 1 hour, subjected to an evaluation of air release described later, and then heated in an autoclave (manufactured by Kurihara Seisakusho, K.K.) at 140°C and 1.3 MPa (13 atm) for 60 minutes to remove air bubbles, thereby obtaining a laminated glass.

<Evaluation>

(Screen image visibility)

P-polarized light was applied to the concave surface of the above-described laminated glass obtained from the laminated film for projection image display in Examples and Comparative Examples, a video was projected, and distortion of a virtual image generated by changing a distance between an evaluator and the laminated glass was observed and evaluated as screen image visibility according to the following standard. Evaluation C or higher was regarded as a pass.

A: no distortion was observed from a distance of 2 m.
B: no distortion was observed from a distance of 1 m, but almost no distortion was observed from a distance of 2 m.
C: no distortion was observed at a distance of 1 m, but slight distortion was observed at a distance of 2 m.
D: no distortion was observed from a distance of 1 m, but distortion was observed from a distance of 2 m.
E: distortion was observed from a distance of 1 m.

(Air release)

As described in the section of <Production of laminated glass>, in a case of producing the laminated glass, the number of dents formed by collapse of air bubbles larger than 1 mm in the laminated glass was measured by visual observation after heating at 140°C and 1.3 MPa (13 atm) for 60 minutes, and the evaluation was performed according to the following standard. As the dent formed by the collapse of air bubbles was smaller, air release was better.

A: there was no dent formed by the collapse of air bubbles larger than 1 mm.
B: 1 to 5 dents formed by the collapse of air bubbles larger than 1 mm were present.
C: 5 to 20 dents formed by the collapse of air bubbles larger than 1 mm were present.
D: 20 dents or more, formed by the collapse of air bubbles larger than 1 mm, were present.

(Impact resistance)

The above-described laminated glass of the laminated films for projection image display of Examples and Comparative Examples was subjected to a ball drop test based on JIS R 3212.

Specifically, a steel ball (227 g, diameter: 38 mm) was dropped from a height of 9 m onto the first glass substrate side of the laminated glass cooled at -20°C, and an amount of glass falling from the second glass substrate was measured. The evaluation was performed based on the following evaluation standard. Evaluation C or higher was regarded as a pass.

A: amount of glass falling was less than 5 g.
B: amount of glass falling was 5 g or more and less than 10 g.
C: amount of glass falling was 10 g or more and less than 15 g.
D: amount of glass falling was 15 g or more.

In Table 3, the column of "Corona treatment" indicates whether or not the corona treatment was performed on the surface of the heat seal layer 2; and "No" indicates that the corona treatment was not performed, and "Yes" indicates that the corona treatment was performed.

In Table 3, the column of "Blast treatment" indicates whether or not the blast treatment was performed on the surface of the heat seal layer 2; and "No" indicates that the blast treatment was not performed, and "Yes" indicates that the blast treatment was performed. In addition, "Yes weak" means that the time of the blast treatment was 3 seconds, "Yes medium" means that the time of the blast treatment was 10 seconds, and "Yes strong" means that the time of the blast treatment was 20 seconds.

The total value of "Layer thickness [μm]" of "Heat seal layer 1" and "Layer thickness [μm]" of "Heat seal layer 2" in Table 3 corresponds to the average thickness of the heat seal layers.

[Table 3]

| | Heat seal layer 1 | | Heat seal layer 2 | | Colona treatment | Blast treatment | Average value A [nm] | Average value B [nm] | Water contact angle [°] | Screen image visibility | Air release | Impact resistance |
|---|---|---|---|---|---|---|---|---|---|---|---|---|
| | Type of composition | Layer thickness [μm] | Type of composition | Layer thickness [μm] | | | | | | | | |
| Example 1 | HS-1 | 1 | HS-2 | 5 | No | Yes weak | 40 | 10 | 93 | C | C | C |
| Example 2 | HS-1 | 1 | HS-3 | 5 | No | Yes weak | 24 | 10 | 93 | B | C | C |
| Example 3 | HS-1 | 1 | HS-4 | 5 | No | Yes weak | 13 | 10 | 93 | A | C | C |
| Example 4 | HS-1 | 1 | HS-4 | 5 | No | Yes medium | 13 | 15 | 93 | A | B | C |
| Example 5 | HS-1 | 1 | HS-4 | 5 | No | Yes strong | 13 | 20 | 93 | A | A | C |
| Example 6 | HS-1 | 1 | HS-4 | 5 | Yes | Yes Strong | 13 | 20 | 60 | A | A | B |
| Example 7 | HS-1 | 1 | HS-4 | 9 | Yes | Yes strong | 13 | 20 | 60 | A | A | A |
| Example 8 | HS-1 | 1 | HS-5 | 9 | No | No | 18 | 7 | 60 | A | C | A |
| Example 9 | HS-1 | 1 | HS-6 | 9 | No | No | 18 | 19 | 60 | A | B | A |
| Example 10 | HS-1 | 1 | HS-7 | 9 | No | No | 19 | 27 | 65 | A | A | A |
| Comparative Example 1 | HS-1 | 1 | HS-8 | 1.5 | No | No | 40 | 10 | 65 | C | C | D |
| Comparative Example 2 | HS-1 | 1 | HS-8 | 5 | No | No | 46 | 10 | 65 | D | C | B |
| Comparative Example 3 | HS-1 | 1 | HS-2 | 5 | No | No | 40 | 5 | 93 | E | D | C |

As shown in Table 3, it was found that the laminated film for projection image display according to the embodiment of the present invention exhibited a desired effect.

Among these, from the comparison of Examples 1 to 3, it was found that, in a case where the average value A was 30 nm or less (preferably 20 nm or less), the effect was more excellent.

In addition, from the comparison of Examples 3 to 5, it was found that, in a case where the average value B was 15 nm or more (preferably 20 nm or more), the effect was more excellent.

In addition, from the comparison between Examples 5 and 6, it was found that, in a case where the water contact angle of the surface of the heat seal layer opposite to the support side was 90° or less, the effect was more excellent.

Explanation of References

10A, 10B, 100: laminated film for projection image display
12, 102: support
14, 104: selective reflection layer
16, 106: heat seal layer
20, 32: laminated glass for projection image display
22: first glass substrate
24: interlayer
26: second glass substrate
30: projection image display system
34: projector
108: glass substrate

**Claims**

**1.** A laminated film for projection image display, comprising:

a support;
a selective reflection layer disposed one surface side of the support; and
a heat seal layer disposed on the other surface side of the support,
wherein an average thickness of the heat seal layer is 5 μm or more,
in a case where arithmetic average heights Sa in a visual field range of a length of 3700 μm and a width of 4900 μm at different three positions on a surface of the heat seal layer opposite to a side of the support are measured, an average value A of the arithmetic average heights Sa at the respective positions is 40 nm or less, and
in a case where arithmetic average heights Sa in a visual field range of a length of 180 μm and a width of 240 μm at different three positions on the surface of the heat seal layer opposite to the side of the support are measured, an average value B of the arithmetic average heights Sa at the respective positions is 7 nm or more.

**2.** The laminated film for projection image display according to claim 1,
wherein a water contact angle of the surface of the heat seal layer opposite to the side of the support is 90° or less.

**3.** The laminated film for projection image display according to claim 1,
wherein the heat seal layer contains a polyvinyl acetal resin.

**4.** The laminated film for projection image display according to claim 1,

wherein the heat seal layer contains silica particles, and
a content of the silica particles is 1% by mass or more with respect to a total mass of the heat seal layer.

**5.** The laminated film for projection image display according to claim 4,
wherein the content of the silica particles is 7% by mass or more with respect to the total mass of the heat seal layer.

**6.** A laminated glass for projection image display, comprising:

two glass substrates; and

the laminated film for projection image display according to any one of claims 1 to 5, disposed between the two glass substrates.

**7.** A projection image display system comprising:

the laminated glass for projection image display according to claim 6; and
a projector which emits projection light to the laminated glass for projection image display.

FIG. 1

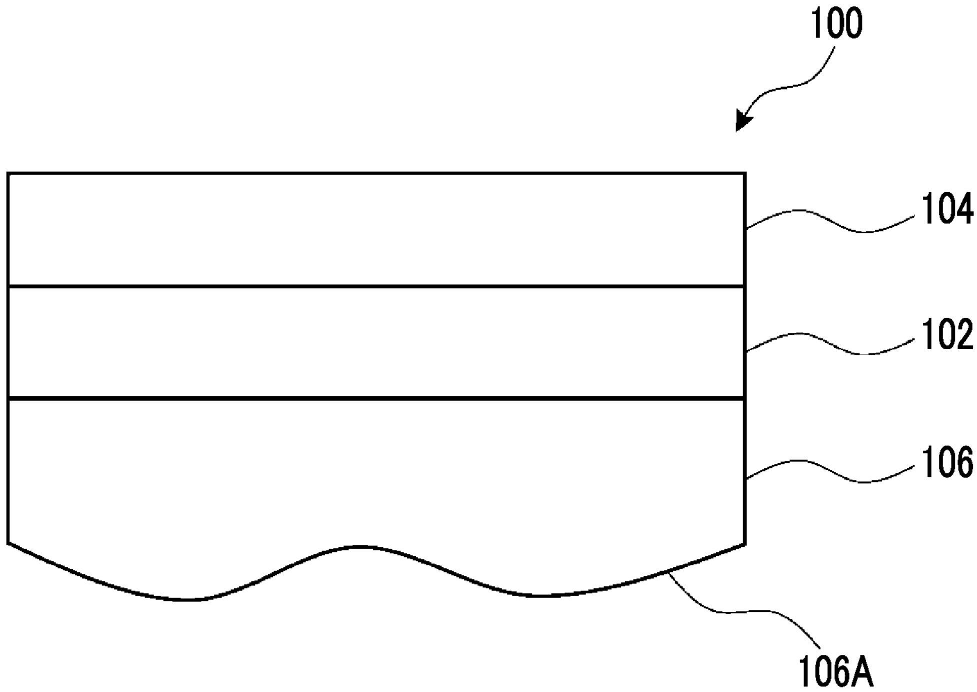


FIG. 2

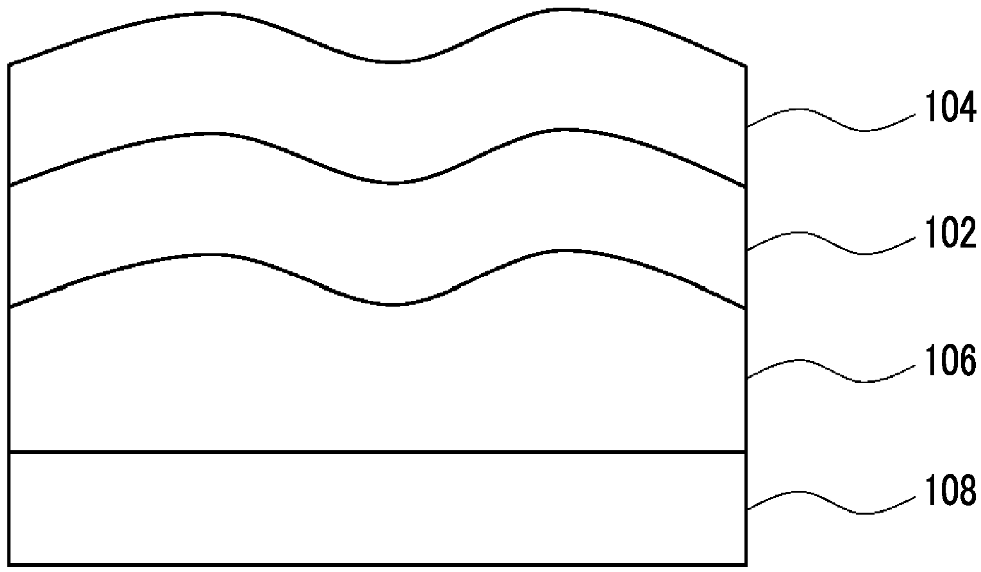

FIG. 3

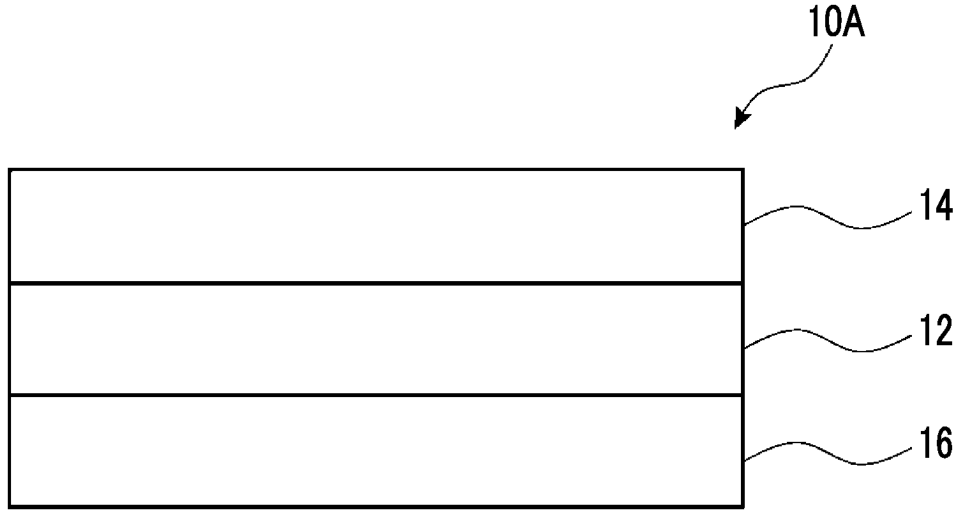


FIG. 4

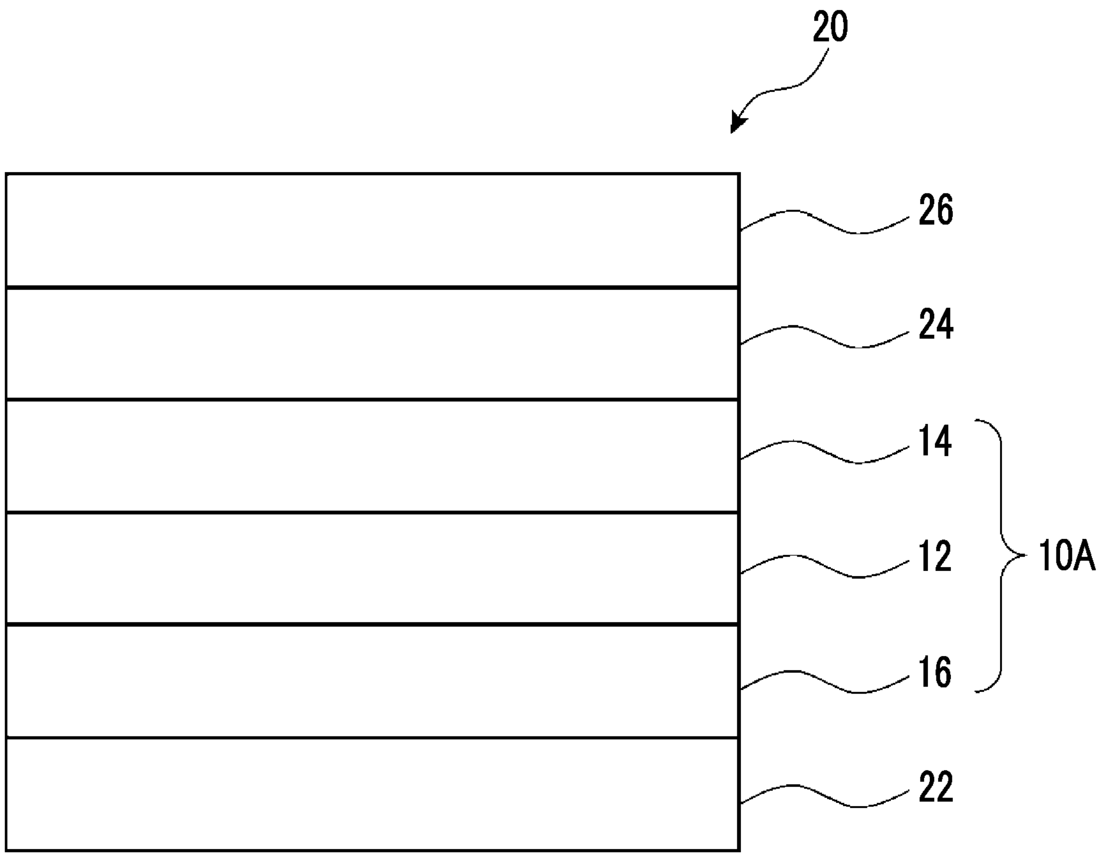

FIG. 5

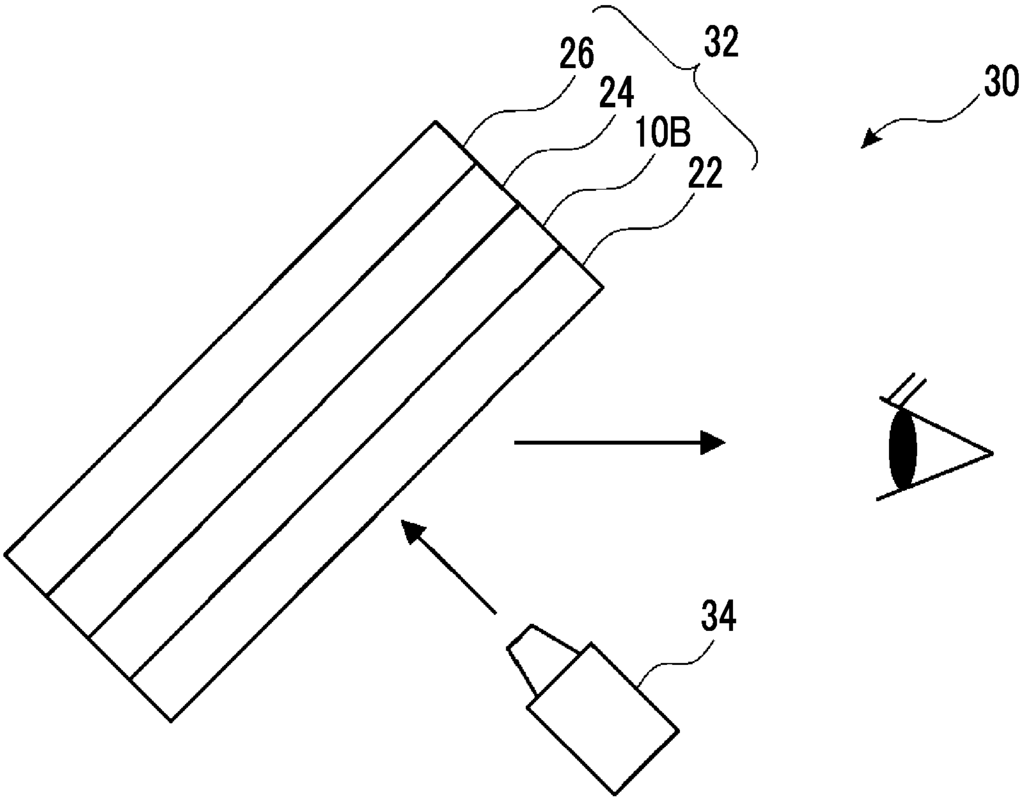

## INTERNATIONAL SEARCH REPORT

International application No.
**PCT/JP2023/041065**

**A. CLASSIFICATION OF SUBJECT MATTER**

***G02B 27/01***(2006.01)i; ***B60J 1/00***(2006.01)i; ***C03C 27/12***(2006.01)i; ***G02B 5/30***(2006.01)i
FI: G02B27/01; B60J1/00 H; C03C27/12 N; G02B5/30

According to International Patent Classification (IPC) or to both national classification and IPC

**B. FIELDS SEARCHED**

Minimum documentation searched (classification system followed by classification symbols)

G02B27/01; G09F9/00-9/46; G02B5/00-5/32; C03C27/12; B32B27/00-27/42; B60J1/00-1/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/123946 A1 (FUJIFILM CORPORATION) 16 June 2022 (2022-06-16) paragraphs [0001], [0049]-[0053], [0153]-[0157], [0228], [0229], fig. 1, 3, 5 | 1-7 |
| P, A | WO 2023/080116 A1 (FUJIFILM CORPORATION) 11 May 2023 (2023-05-11) paragraphs [0001], [0035]-[0037], [0203]-[0208], fig. 1, 2 | 1-7 |

☐ Further documents are listed in the continuation of Box C.
☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 January 2024** | **06 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**
**Information on patent family members**

International application No.
**PCT/JP2023/041065**

| Patent document cited in search report | Publication date (day/month/year) | Patent family member(s) | Publication date (day/month/year) |
|---|---|---|---|
| WO 2022/123946 A1 | 16 June 2022 | CN 116568545 A | |
| WO 2023/080116 A1 | 11 May 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020179787 A
- US 4683327 A
- US 5622648 A
- US 5770107 A
- WO 95022586 A
- WO 95024455 A
- WO 97000600 A
- WO 98023580 A
- WO 98052905 A
- JP 1272551 A
- JP H1272551 A
- JP 6016616 A
- JP H6016616 A
- JP 7110469 A
- JP H7110469 A
- JP 11080081 A
- JP H11080081 A
- JP 2001328973 A
- JP 2003287623 A
- JP 2002302487 A
- JP 2002080478 A
- JP 2002080851 A
- JP 2010181852 A
- JP 2014034581 A
- JP 2007272185 A
- JP 2012203237 A
- JP 2013113913 A
- JP 9506837 A
- JP H9506837 A
- WO 2020080355 A
- JP 2017021302 A
- WO 2015190157 A
- WO 2010116912 A
- JP 2000221449 A
- WO 2014112575 A


### Non-patent literature cited in the description


- Liquid Crystal Chemical Experiment Introduction. Japan Liquid Crystal Society. Sigma Corporation, 2007
- Liquid Crystal Handbook. Liquid Crystal Handbook Editing Committee. Maruzen Publishing Co., Ltd., 196
- *Makromol. Chem*, 1989, vol. 190, 2255
- *Advanced Materials*, 1993, vol. 5, 107
- Liquid Crystal Device Handbooks. Chiral Agents for TN and STN. Japan Society for the Promotion of Science, 1989, vol. 4-3, 199